(19) **Europäisches Patentamt**
**European Patent Office**
**Office européen des brevets**

(11) **EP 4 700 671 A1**

(12) **EUROPEAN PATENT APPLICATION**

(43) Date of publication:
**25.02.2026 Bulletin 2026/09**

(21) Application number: **24195092.2**

(22) Date of filing: **19.08.2024**

(51) International Patent Classification (IPC):
*G06Q 10/0635* (2023.01)    *G06Q 10/0631* (2023.01)
*G06Q 50/04* (2012.01)

(52) Cooperative Patent Classification (CPC):
**G06Q 10/0635; G06Q 10/0631; G06Q 50/04**

| | |
|---|---|
| (84) Designated Contracting States:<br>**AL AT BE BG CH CY CZ DE DK EE ES FI FR GB**<br>**GR HR HU IE IS IT LI LT LU LV MC ME MK MT NL**<br>**NO PL PT RO RS SE SI SK SM TR**<br>Designated Extension States:<br>**BA**<br>Designated Validation States:<br>**GE KH MA MD TN** | • **JONES, Jerald Andrew**<br>  **Mobile, AL 36695 (US)**<br>• **SETH, Arpan**<br>  **Jersey City, NJ 07306 (US)**<br>• **CASEY, Thomas**<br>  **Loxley, AL 36551 (US)**<br>• **LACKEY, Kevin Tyrone**<br>  **Fairhope, AL 36532 (US)** |
| (71) Applicant: **Evonik Operations GmbH**<br>**45128 Essen (DE)** | (74) Representative: **Evonik Patent Association**<br>**c/o Evonik Industries AG**<br>**IP Management**<br>**Postcode 84/339**<br>**Rodenbacher Chaussee 4**<br>**63457 Hanau (DE)** |
| (72) Inventors:<br>• **GILBERT, Christopher**<br>  **Mobile, AL 36604 (US)** | |

(54) **METHOD FOR MAKING PREDICTIONS FOR A PROCESS HAZARD ANALYSIS (PHA) RECOMMENDATION**

(57)    The present invention relates to a computer-implemented method for making predictions for a process hazard analysis (PHA) recommendation, a computer-program product or a computer-readable medium comprising instructions which, when the program is executed by a computer, cause the computer to carry out said method, a system for making predictions for a process hazard analysis (PHA) recommendation comprising an operating unit adapted to carry out said method and having access to a database of said method, and a method of training an artificial intelligence to make predictions for a process hazard analysis (PHA) recommendation.

**Description**

The present invention is on the field of chemical plant safety. In detail, the present invention relates to a computer-implemented method for making predictions for a process hazard analysis (PHA) recommendation, a computer-program product or a computer-readable medium comprising instructions which, when the program is executed by a computer, cause the computer to carry out said method, a system for making predictions for a process hazard analysis (PHA) recommendation comprising an operating unit adapted to carry out said method and having access to a database of said method, and a method of training an artificial intelligence to make predictions for a process hazard analysis (PHA) recommendation.

Chemical plants in the United States that meet certain thresholds are required to assess their safety via a process called process hazard review. A process hazard analysis (PHA), sometimes also referred to as process hazard evaluation is an exercise for the identification of hazards of a process facility and the quality or semi-quantitative assessment of the associated risk. A PHA provides information intended to assist managers and employees in making decision for improving safety and reducing the consequences of unwanted or unplanned releases of hazardous materials. A PHA is directed towards analyzing potential causes and consequences of fires, explosions, releases of toxic or flammable chemicals and major spills of hazardous chemicals. It focuses on equipment, instrumentation, utilities, human actions, and external factors that might impact the process. It is one of the elements of the program of the Occupational Safety and Health Administration (OSHA) for process safety management.

This review identifies potential risks in terms of severity and likelihood. There are varieties of methodologies that can be used to conduct a process hazard analysis, including checklists, hazard identification (HAZID) review, what-if review and SWIFT (Structured What If Technique), hazard and operability studies (HAZOP), failure mode and effect analysis (FMEA), etc. The combination of the severity and likelihood is used for the potential impact of the various scenarios that are assessed. For example, a high severity and a high likelihood would be a very high potential impact. This is well established in the literature, sometimes referred to as a risk matrix. Chemical companies have long used this matrix to rank and prioritize the safety recommendations. After a study, there can be hundreds of safety recommendations. These recommendations can often be repeated, and some recommendations reduce the safety risk more than others.

Time and resources are limited, however, so not all recommendations can be implemented. The challenge is therefore to prioritize the recommendations. Often there are statutory requirements to complete all the recommendations within a certain time frame.

Accordingly, there was still a need for a method or a tool that allows to prioritize the process hazard analysis (PHA) recommendation and to optimize the reduction of risk with respect of complexity.

It was found that this need is met by the method according to the present invention.

One object of the present invention is therefore a computer-implemented method for making a recommendation for a process hazard analysis (PHA), comprising the steps of

A) initiating a processing unit to receive, retrieve and/or request data on one or more safety risks assigned to a specific equipment or area from an input / output device,
B) for each safety risk of step A), assigning a value for the severity and a value for the initiating event frequency to give the risk scenarios,
C) for each risk scenario of step B), reading off a risk score RS from a symmetric risk matrix using the severity value and the value for initiating event frequency of step B),
D) for each risk scenario of step C), describing the one or more recommendations for the scenario,
E) for each risk scenario of step C), applying a credit $C$ to each of the one or more recommendations of step d), wherein said credit describes the impact of the recommendation for mitigating a risk,
F) for each risk scenario of step C), calculating the remaining risk score by subtracting the credit of step E) from the risk score of step C),
G) for each safety risk of step A), forming the sum of the remaining risk scores of each risk of scenario of step B) obtained in step F),
H) for each risk scenario of step B), calculating the weighted safety risk using the formula

$$W = 10^{RS}$$

with

$RS$    being the risk read off in step C),
$W$    being the weighted safety risk, wherein the weighted safety risk describes the overall risk of the scenario,

I) sending the safety risk of step A), the one or more recommendations of step D) and the credit of step E), the sum of the remaining risk scores of step G), and/or the weighted safety risk of step H) to the input / output device of step A).

The risk matrix of step ii) and the one or more risk recommendations of step iv) can be stored on the same database, i.e., the database of step ii) can be identical with the database of step iv). Alternatively, the risk matrix of step ii) and the one or more risk recommendations of step iv) can be stored on different databases, i.e., the database of step ii) is not identical with the database of step iv).

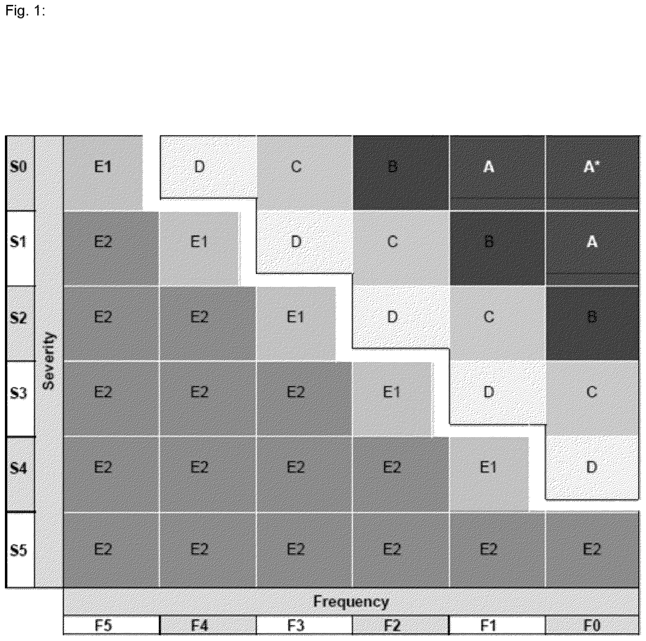

The method according to the present invention allows to address recommendations in a specific order that reduces the safety risk as fast as possible. For this purpose, the method creates a way to weight all safety risks to give a Weighted SafEty Risk (*WISER*). Said *WISER* is a key component of allowing the individual risk scenarios to be sorted and optimized. The *WISER* is based primarily upon a defined risk matrix relating to the likelihood or frequency of initiating events and the severity of the consequences. An example of a typical risk matrix is given in Figure 1. A typical risk matrix is composed of rows, which in ongoing direction define a stepwise decrease in severity by each one order of magnitude, and columns, which in ongoing direction define a stepwise increase in event likelihood by each one order of magnitude. In a typical risk matrix, the risk associated with severity rankings at a constant level of initiating event likelihood are defined to vary by one order of magnitude, i.e., a factor of ten, between adjacent severity rankings. When a risk matrix has six severity rankings, as the risk matrix of Figure 1, that means that for constant initiating event likelihood, it follows S/S1 = S1/S2 = S2/S3 = S3/S4 = S4/S5 = 10. In order to create a symmetric matrix in which safeguards can reduce risk either by (1) reducing event likelihood or (2) reducing event severity, initiating likelihoods should also be defined with an order of magnitude ratio between adjacent initiating event likelihoods. Based on this requirement, it follows for the risk matrix of Figure 1 that F0/F1 = F1/F2 = F2/F3 = F3/F4 = F4/F5 = 10.

In an embodiment of the method according to the present invention in the risk matrix of step ii) the risks associated with severity rankings at a constant value of the initiating event likelihood are defined to vary stepwise by one order of magnitude between adjacent severity rankings and the risks associated with event likelihood rankings at a constant value of severity are defined to vary stepwise by one order of magnitude between adjacent event likelihood rankings.

In the risk matrix, each scenario is assigned to a severity ranking and an initiating event likelihood. This pairing has the effect that each risk scenario is classified into a specific risk matrix. In one extreme case, a scenario having the highest frequency for the initiating event likelihood and the highest severity is classified into the highest risk class, representing a risk where any operation should be stopped. In the other extreme, a scenario having the lowest frequency for the initiating event likelihood and the lowest severity is classified into the lowest risk class, representing an acceptable risk.

The weighted safety risk used in the method according to the present invention describes the overall risk of the scenario. It is also of particular interest for the user to know which of the various recommendations contributes the most to the overall risk and, in particular, to have a ranking of the various recommendations according to the size of the contribution to the overall risk. The method according to the present invention therefore also allows to investigate the recommendation for the one or more risk scenarios of step i) by their individual contribution to the overall risk and to sort the one or more risk scenarios of step i) by their individual contribution to the total risk from the largest to the lowest. This helps to identify recommendations, which have the largest effect on the overall risk, and to focus on them.

In an embodiment the method according to the present invention further comprises the step of

F1) sorting the recommendations of step D), comprising the steps of

F1a) identifying scenarios, which are associated with a unique recommendation i, and creating groups $S_i$ of the thus identified scenarios,

F1b) for each member $s$ of the group $S_i$, calculating the weighted safety risk $W_s$ using the formula (II)

$$W_s = 10^{RS_i}$$

with $RS_i$ being the risk score of the risk of the scenario,

F1c) for each group $S_i$, calculating the total weighted safety risk $WISER_{S_i}$ using the formula (III)

$$WISER_{S_i} = \sum_{s \in S_i} W_s$$

with $W_s$ being the weighted safety risk of step F1b),

F1d) for each group $S_i$, applying the recommendation credit $C_i$ to all scenarios $s_i$ of the group $S_i$,

F1e) for each group $S_i$, repeating the steps F1b) and F1c) with the risk scores of step F1d) to get a recalculated $WISER_{S_i}$,

F1f) for each group $S_i$, calculating the *WISER* reduction potential, *WRP,* for the corresponding recommendation i, by subtracting the total $WISER_{S_i}$ obtained in step F1e) from the total $WISER_{S_i}$ obtained in step F1c), and

F1g) ranking the recommendations in descending order by their *WRP* obtained in step F1f) to give a list L1.

However, a scenario can have multiple recommendations and a given recommendation can apply to multiple scenarios. For such scenarios, it is preferred that equivalents in the *WISER* reduction potential *WRP* are resolved and other interdependent recommendations are closed.

In a preferred embodiment of the method according to the present invention an equivalence in *WRP* is resolved by considering additional characteristics of the recommendations, preferably the value of *C* and the number of scenarios to which the recommendation is associated.

In one preferred embodiment the method according to the present invention further comprises the step of

F2) running through an iterative process, comprising the steps of

F2a) picking the recommendations with the highest *WRP* from the list L1 obtained in step F1g) to get selected recommendations *i**,

F2b) subtracting the credit $C_{i*}$ for the selected recommendations *i** of step F2a) from the risk scores for the corresponding group $S_{i*}$ to give the residual risk score $RS_{i*}$ of the risk of the scenarios in $S_{i*}$,

F2b) re-calculating the individual weighted safety risk $W_s$ using the formula (II) $W_s = 10^{RS_{i*}}$

with $RS_{i*}$ being the risk score of the risk of the scenarios in $S_{i*}$ of step F2b),

F2c) re-calculating the total weighted safety risk $WISER_{S_i}$ using the formula (V)

$$WISER_{i*} = \sum_{s \in S_{i*}} W_s + \sum_{m \in S \setminus S_{i*}} W_m$$

wherein

| | |
|---|---|
| each i | represents an iteration, defined by the selected recommendations *i**, |
| S | is the set of all scenarios, |
| m | is a scenario belonging to the set of all scenarios not in $S_{i*}$, and |
| $WISER_{i*}$ | is the total *WISER* for the entire analysis considering all scenarios S after execution of recommendation i*, |

and

F2d) removing the recommendation i* applied in step F2c) from the list L1 and adding said recommendation to a list L2, in step H) also the list L2 is sent to the input / output device of step A).

In another preferred embodiment the method according to the present invention further comprises the steps of

F3) repeating the sorting of step F1) with the list L1 obtained from step F2d), and

F4) subjecting the sorted list L1 obtained from the step F3) to the iterative process of step F2)

In a further preferred embodiment of the method according to the present invention the steps F3) and F4) are repeated until the *WRP* is lower than a threshold value and/or until there is a given number of recommendations on the list L2.

The processing unit and the input / output device of the method according to the present invention can be in the same or different countries. Likewise, they can be in the same or different places, for example at one or different industrial site.

In one embodiment of the process according to the present invention the processing unit and the input / output device are in the same country, or place.

In an alternative embodiment of the process according to the present invention the processing unit and the input / output device are in different countries, or places.

Another object of the present invention is a computer-program product comprising instructions which, when the program is executed by a computer, cause the computer to carry out the method according to the present invention.

A further object of the present invention is a computer-readable medium comprising instructions which, when executed by a computer, cause the computer to carry out the method according to the present invention.

The computer-readable medium may be any type of physical or virtual medium suitable for data storage. Examples for a physical medium comprise computer drives such as hard disk drives, magneto-optical disc drives, optical disk drives, memory cards, and preferably non-volatile, flash-memory cards, such as secure digital (SD) cards, and USB mass storage devices, such as USB flash drives. Examples for a virtual medium comprise a file-hosting service, also known as cloud-storage service, online file-storage provider, or one-click hosting, also known as cyberlocker, which is an internet hosting service specifically designed to hist user files. These services allow users to upload files that can be assessed over the internet after providing a username and password or other authentication. The owner of the files may allow or grant others access to or use of the files in question under certain conditions. Typically, the hosting services allow HTTP access, and in some cases, FTP access.

Yet another object of the present invention is a system for making predictions for a process hazard analysis (PHA) recommendation, comprising an operating unit adapted to carry out the method according to the present invention and having access to the database of step C) of the method according to the present invention.

Yet a further object of the present invention is a method on training an artificial intelligence to make predictions for a process hazard analysis recommendation, comprising the steps of

a) collecting historical data from previously implemented PHA recommendations, wherein said data comprises the cost required for implementing each risk recommendation, and the time required for implementing each risk recommendation,

b) preparing the data of step a) for training artificial intelligence, wherein the preparing comprises data cleaning, removing outliers from the data, and/or normalizing the data, and

c) training the artificial intelligence on the prepared data of step b) in order to make a prediction of implementation cost and implementation time required to carry out a recommendation.

The present invention is further illustrated by the following example and figures.

Description of the Figures:

Fig. 1   shows a representative symmetrical risk matrix with six frequency rankings F0 to F5 and six severity rankings S0 to S5. In detail, the frequency rankings have the meanings F0 = frequent, F1 = probable, F2 = occasional, F3 = remote, F4 = improbable, and F5 = not plausible, and the severity rankings have the meanings S0 = disastrous, S1 = major, S2 = significant, S3 = moderate, S4 = low, and S5 = very low.

Fig.2   shows the risk reduction comparison from an exemplary plant to *WISER* reduction though 752 recommendations.

Fig. 3   shows the risk reduction comparison from an exemplary plant to *WISER* reduction though 181 recommendations.

Fig. 4   shows the risk reduction comparison from an exemplary plant to *WISER* reduction though 132 recommendations.

Example:

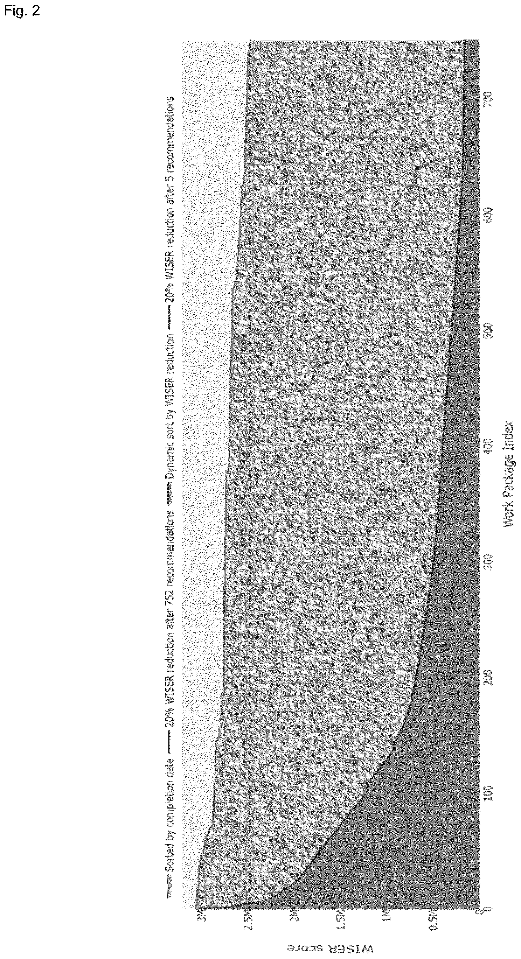

The results and figures 2 to 4 were obtained from the use of the method according to the present invention on an exemplary chemical plant to show the potential impact *WISER* prioritization can have on risk.

Figures 2 to 4 reflect the risk reduction potential had the *WISER* recommendation path be followed. In these figures, the curve in grey shows the actual risk reduction and the area under that curve is the remaining risk, and the curve in black represents the risk reduction if the *WISER* prioritization had been utilized.

For Figure 2, if *WISER* prioritization had been followed, as equivalent risk reduction would have been accomplished after completion of 5 recommendation instead of 752.

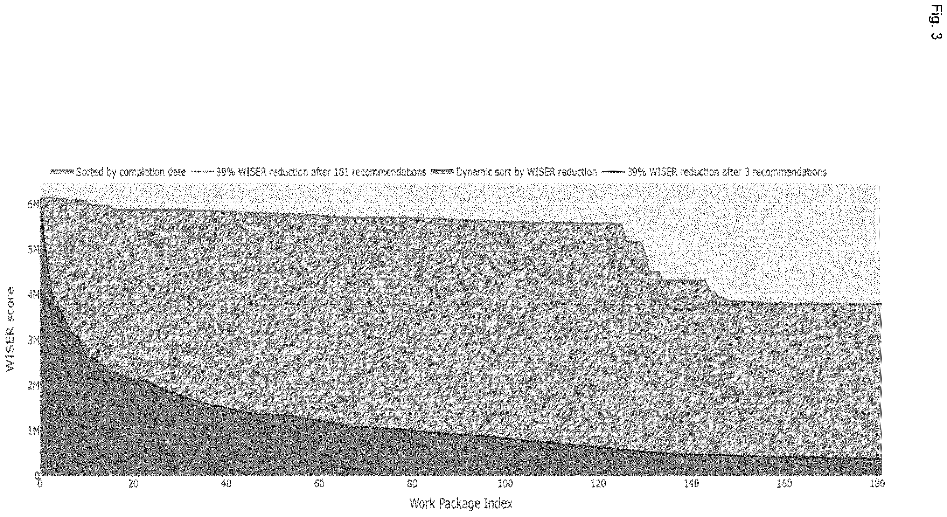

For Figure 3, if *WISER* prioritization had been followed, as equivalent risk reduction would have been accomplished after completion of 4 recommendation instead of 181.

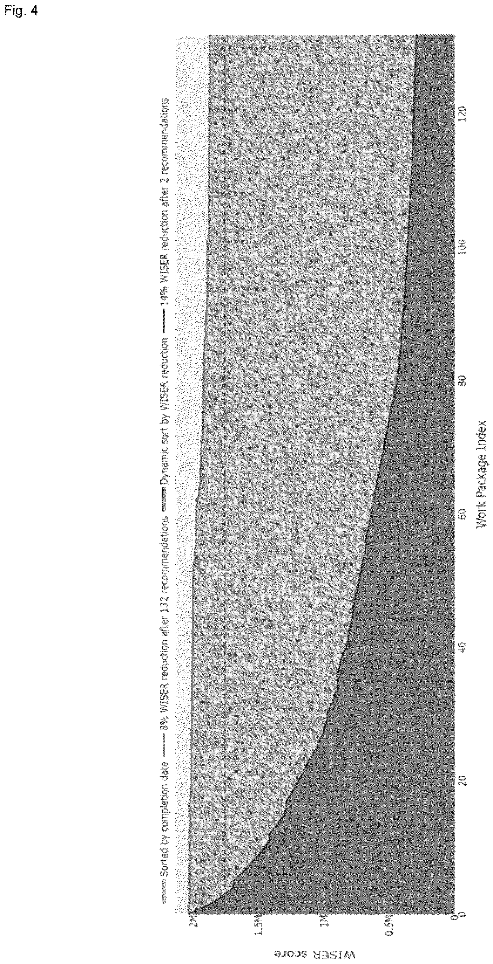

For Figure 4, if *WISER* prioritization had been followed, as equivalent risk reduction would have been accomplished with less than 1 recommendation instead of 132.

**Claims**

1. A computer-implemented method for making a recommendation for a process hazard analysis (PHA), comprising the steps of

   A) initiating a processing unit to receive, retrieve and/or request data on one or more safety risks assigned to a specific equipment or area from an input / output device,
   B) for each safety risk of step A), assigning a value for the severity and a value for the initiating event frequency to give the risk scenarios,
   C) for each risk scenario of step B), reading off a risk score RS from a symmetric risk matrix using the severity value and the value for initiating event frequency of step B),
   D) for each risk scenario of step C), describing the one or more recommendations for the scenario,
   E) for each risk scenario of step C), applying a credit C to each of the one or more recommendations of step d), wherein said credit describes the impact of the recommendation for mitigating a risk,
   F) for each risk scenario of step C), calculating the remaining risk score by subtracting the credit of step E) from the risk score of step C),
   G) for each safety risk of step A), forming the sum of the remaining risk scores of each risk of scenario of step B) obtained in step F),
   H) for each risk scenario of step B), calculating the weighted safety risk using the formula

$$W = 10^{RS}$$

   with

   $RS$ being the risk read off in step C),
   $W$ being the weighted safety risk, wherein the weighted safety risk describes the overall risk of the scenario,

   I) sending the safety risk of step A), the one or more recommendations of step D) and the credit of step E), the sum of the remaining risk scores of step G), and/or the weighted safety risk of step H) to the input / output device of step A).

2. The method according to claim 1, further comprising the step of

   F1)   sorting the recommendations of step D), comprising the steps of
   F1a)  identifying scenarios, which are associated with a unique recommendation $i$, and creating groups $S_i$ of the thus identified scenarios,
   F1b)  for each member $s$ of the group $S_i$, calculating the weighted safety risk $W_s$ using the formula (II)
   $$W_s = 10^{RS_i}$$
   with $RS_i$ being the risk score of the risk of the scenario,
   F1c)  for each group $S_i$, calculating the total weighted safety risk $WISER_{S_i}$ using the formula (III)

$$WISER_{S_i} = \sum_{s \in S_i} W_s$$

   with $W_s$ being the weighted safety risk of step F1b),
   F1d)  for each group $S_i$, applying the recommendation credit $C_i$ to all scenarios $s_i$ of the group $S_i$ ,
   F1e)  for each group $S_i$, repeating the steps F1b) and F1c) with the risk scores of step F1d) to get a recalculated $WISER_{S_i}$,
   F1f)  for each group $S_i$, calculating the *WISER* reduction potential, *WRP,* for the corresponding recommendation i, by subtracting the total $WISER_{S_i}$ obtained in step F1e) from the total $WISER_{S_i}$ obtained in step F1c), and
   F1g)  ranking the recommendations in descending order by their *WRP* obtained in step F1f) to give a list L1.

3. The method according to claim 2, wherein an equivalence in *WRP* is resolved by considering additional characteristics of the recommendations, preferably the value of *C* and the number of scenarios to which the recommendation is associated.

4. The method according to claim 2 or 3, further comprising the step of

    F2) running through an iterative process, comprising the steps of

    F2a) picking the recommendations with the highest *WRP* from the list L1 obtained in step F1g) to get selected recommendations i*,

    F2b) subtracting the credit $C_{i*}$ for the selected recommendations i* of step F2a) from the risk scores for the corresponding group $S_{i*}$ to give the residual risk score $RS_{i*}$ of the risk of the scenarios in $S_{i*}$,

    F2b) re-calculating the individual weighted safety risk $W_s$ using the formula (II) 

$$W_s = 10^{RS_{i*}}$$

    with $RS_{i*}$ being the risk score of the risk of the scenarios in $S_{i*}$ of step F2b),

    F2c) re-calculating the total weighted safety risk $WISER_{S_i}$ using the formula (V)

$$WISER_{i*} = \sum_{s \in S_{i*}} W_S + \sum_{m \in S \setminus S_{i*}} W_m$$

    wherein

| | |
|---|---|
| each i | represents an iteration, defined by the selected recommendations *i**, |
| S | is the set of all scenarios, |
| m | is a scenario belonging to the set of all scenarios not in $S_{i*}$, and |
| $WISER_{i*}$ | is the total *WISER* for the entire analysis considering all scenarios S after execution of recommendation *i**, |

    and

    F2d) removing the recommendation *i** applied in step F2c) from the list L1 and adding said recommendation to a list L2, in step H) also the list L2 is sent to the input / output device of step A).

5. The method according to any of claims 2 to 4, further comprising the steps of

    F3) repeating the sorting of step F1) with the list L1 obtained from step F2d), and

    F4) subjecting the sorted list L1 obtained from the step F3) to the iterative process of step F2).

6. The method according to claim 5, wherein the steps F3) and F4) are repeated until the *WRP* is lower than a threshold value and/or until there is a given number of recommendations on the list L2.

7. The method according to any of claims 1 to 6, wherein the processing unit and the input / output device are in the same country, or place.

8. The method according to any of claims 1 to 7, wherein the processing unit and the input / output device are in different countries, or places.

9. A computer-program product comprising instructions which, when the program is executed by a computer, cause the computer to carry out the method according to any of claims 1 to 8.

10. A computer-readable medium comprising instructions which, when executed by a computer, cause the computer to carry out the method according to any of claims 1 to 8.

11. A system for making predictions for a process hazard analysis (PHA) recommendation, comprising an operating unit adapted to carry out the method according to the present invention and having access to the database of step C) of the method according to any of claims 1 to 8.

12. A method on training an artificial intelligence to make predictions for a process hazard analysis recommendation, comprising the steps of

a) collecting historical data from previously implemented PHA recommendations, wherein said data comprises the cost required for implementing each risk recommendation, and the time required for implementing each risk recommendation,
b) preparing the data of step a) for training artificial intelligence, wherein the preparing comprises data cleaning, removing outliers from the data, and/or normalizing the data, and
c) training the artificial intelligence on the prepared data of step b) in order to make a prediction of implementation cost and implementation time required to carry out a recommendation.

Fig. 1:

| | Severity | F5 | F4 | F3 | F2 | F1 | F0 |
|---|---|---|---|---|---|---|---|
| S0 | | E1 | D | C | B | A | A* |
| S1 | | E2 | E1 | D | C | B | A |
| S2 | | E2 | E2 | E1 | D | C | B |
| S3 | | E2 | E2 | E2 | E1 | D | C |
| S4 | | E2 | E2 | E2 | E2 | E1 | D |
| S5 | | E2 | E2 | E2 | E2 | E2 | E2 |
| | | Frequency | | | | | |

Fig. 2

Fig. 3

Fig. 4

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/148114 A1 (BINGHAM KENNETH GEORGE [CA]) 12 May 2022 (2022-05-12) | 1,9-12 | INV.<br>G06Q10/0635 |
| A | * paragraph [0003] - paragraph [0029] *<br>* paragraph [0048] - paragraph [0175] *<br>* figure 5 * | 2-8 | G06Q10/0631<br>G06Q50/04 |
| A | US 2007/122911 A1 (BROWNING CHRISTINE E [US] ET AL) 31 May 2007 (2007-05-31)<br>* paragraph [0002] *<br>* paragraph [0008] - paragraph [0019] *<br>* paragraph [0029] - paragraph [0080] * | 1-12 | |
| A | EKRAMIPOOYA ALI ET AL: "Predicting possible recommendations related to causes and consequences in the HAZOP study worksheet using natural language processing and machine learning: BERT, clustering, and classification",<br>JOURNAL OF LOSS PREVENTION IN THE PROCESS INDUSTRIES, ELSEVIER, UNITED KINGDOM, vol. 89, 1 April 2024 (2024-04-01), XP087526985,<br>ISSN: 0950-4230, DOI: 10.1016/J.JLP.2024.105310<br>[retrieved on 2024-04-01]<br>* abstract *<br>* page 1 - page 6 * | 1-12 | TECHNICAL FIELDS SEARCHED (IPC)<br><br>G06Q<br>G05B |

The present search report has been drawn up for all claims

| Place of search | Date of completion of the search | Examiner |
|---|---|---|
| The Hague | 31 January 2025 | Bohner, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 5092

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2025

| Patent document cited in search report | Publication date | Patent family member(s) | | Publication date |
|---|---|---|---|---|
| US 2022148114 A1 | 12-05-2022 | US | 2022148114 A1 | 12-05-2022 |
| | | WO | 2020181392 A1 | 17-09-2020 |
| US 2007122911 A1 | 31-05-2007 | NONE | | |

EPO FORM P0459

For more details about this annex : see Official Journal of the European Patent Office, No. 12/82